# EUROPEAN PATENT APPLICATION

(11) **EP 2 819 107 A1**
(43) Date of publication of application: **31.12.2014**
(21) Application number: 13173526.8
(22) Date of filing: 25.06.2013
(51) Int. Cl.: G07F 7/08, G07C 9/00, G07F 7/10

(54) **Security token and transaction authorization system**

(71) Applicant: NXP B.V., 5656 AG Eindhoven (NL)
(72) Inventor: Suwald, Thomas, 5656 AG Eindhoven (NL)
(74) Representative: Krott, Michel

(57) **Abstract**

A security token is conceived, in particular a smart card, being adapted to support multi-factor user authentication, said security token comprising: a tactile sensing user interface being adapted to capture a stream of input data corresponding to a sequence of positions of a finger engaging with said tactile sensing user interface and representing a user-specific credential for authorizing a transaction; a conversion unit being adapted to convert said stream of input data into a machine-readable credential; a computation unit being adapted to compute a machine-readable authentication code based on the machine-readable credential; a contact-bound interface being adapted to transmit said machine-readable authentication code to a first transaction device; a contactless interface being adapted to transmit said machine-readable authentication code to a second transaction device.

## Description

### FIELD

The present disclosure relates to a security token, in particular to a smart card. Furthermore, the present disclosure relates to a transaction authorization system.

### BACKGROUND

Security tokens, in particular smart cards, are widely used for carrying out transactions, e.g. for withdrawing money from an ATM or for paying at a Point-of-Sale (POS). Many smart cards are designed for a single purpose, or at most for a limited amount of purposes, and typically comprise a contact-bound interface for exchanging data with external transaction devices. Nowadays, some contactless smart cards offer an improved user experience by means of a more convenient and secure user interface. However, conventional smart cards still do not sufficiently support multiple transaction modes in a reliable and secure way.

### SUMMARY

It is an object of the present disclosure to improve security tokens of the kind set forth, in particular to improve their capability to support multiple transaction modes in a reliable and secure way. This object is achieved by a security token as claimed in claim 1 and a transaction authorization system as claimed in claim 14.

First, a security token is conceived, in particular a smart card, being adapted to support multi-factor user authentication, said security token comprising: a tactile sensing user interface being adapted to capture a stream of input data corresponding to a sequence of positions of a finger engaging with said tactile sensing user interface and representing a user-specific credential for authorizing a transaction; a conversion unit being adapted to convert said stream of input data into a machine-readable credential; a computation unit being adapted to compute a machine-readable authentication code based on the machine-readable credential; a contact-bound interface being adapted to transmit said machine-readable authentication code to a first transaction device; a contactless interface being adapted to transmit said machine-readable authentication code to a second transaction device.

According to an illustrative embodiment, the security token further comprises a comparison unit being adapted to compare the machine-readable authentication code with a machine-readable reference code stored in the security token and to generate a corresponding authentication result, wherein the contact-bound interface and the contactless interface are further adapted to transmit said authentication result to the first transaction device and the second transaction device, respectively.

According to a further illustrative embodiment, the user-specific credential is a personal identification number or a challenge key.

According to a further illustrative embodiment, the contact-bound interface conforms to the standard ISO/IEC 7816.

According to a further illustrative embodiment, the contactless interface conforms to the standard ISO/IEC 14443.

According to a further illustrative embodiment, the computation unit is configurable by a host application which is external to the security token.

According to a further illustrative embodiment, the stream of input data includes device-specific non-linearities.

According to a further illustrative embodiment, the security token further comprises an optical feedback unit.

According to a further illustrative embodiment, the security token further comprises an audio feedback unit.

According to a further illustrative embodiment, the security token is further adapted to transfer display data to an external display device via near field communication.

According to a further illustrative embodiment, the security token is further adapted to transfer display data to an external display device through a contactless reader device.

According to a further illustrative embodiment, the security token is further adapted to transfer display data to an external display device through a contact-bound reader device.

According to a further illustrative embodiment, the security token is further adapted to transfer display data to an external display device through a modem.

Furthermore, a transaction authorization system is conceived that comprises a security token of the kind set forth and a transaction device.

According to a further illustrative embodiment, the transaction device is one of a personal computer, a POS-terminal and an ATM.

### DESCRIPTION OF DRAWINGS

The embodiments will be described in more detail with reference to the appended drawings, in which:
Fig. 1 illustrates a smart card in accordance with an illustrative embodiment;
Fig. 2 illustrates the enrolment of tactile reference patterns in a smart card;
Fig. 3 illustrates the recognition of tactile reference patterns in a smart card;
Fig. 4 illustrates authentication modes in a smart card;
Fig. 5 illustrates the use of an external display for displaying data to a user;
Fig. 6 illustrates the transfer of display data to a mobile phone via near field communication (NFC);
Fig. 7 illustrates the transfer of display data to a PC through a contactless reader device;
Fig. 8 illustrates the transfer of display data to a PC through a contact-bound reader device;
Fig. 9 illustrates the transfer of display data to a mobile phone through a modem;
Fig. 10 illustrates a modem suitable for transferring display data to a mobile phone;
Fig. 11 illustrates various elements of a smart card;
Fig. 12 illustrates a first example of a smart card system architecture;
Fig. 13 illustrates a second example of a smart card system architecture;
Fig. 14 illustrates a third example of a smart card system architecture;
Fig. 15 illustrates how a smart card is fabricated from several components.

### DESCRIPTION OF EMBODIMENTS

A smart card in accordance with the present disclosure comprises, besides a dual communication interface - comprising at least one contactless interface unit and at least one contact-bound interface unit for communicating with external transaction devices - a tactile sensing user interface for capturing a stream of input data representing a user-specific credential for authorizing a transaction, which is used to compute an authentication code for the authorization process. Thereby, the smart card supports multiple transaction modes, as will be explained in more detail below. More specifically, the smart card supports multiple authentication modes or schemes. For example, said authentication modes or schemes may be based on multi-factor user authentication, requiring something a user knows (e.g. a personal identification number), something a user has (the smart card) and something that characterizes a user (a handwriting characteristic).

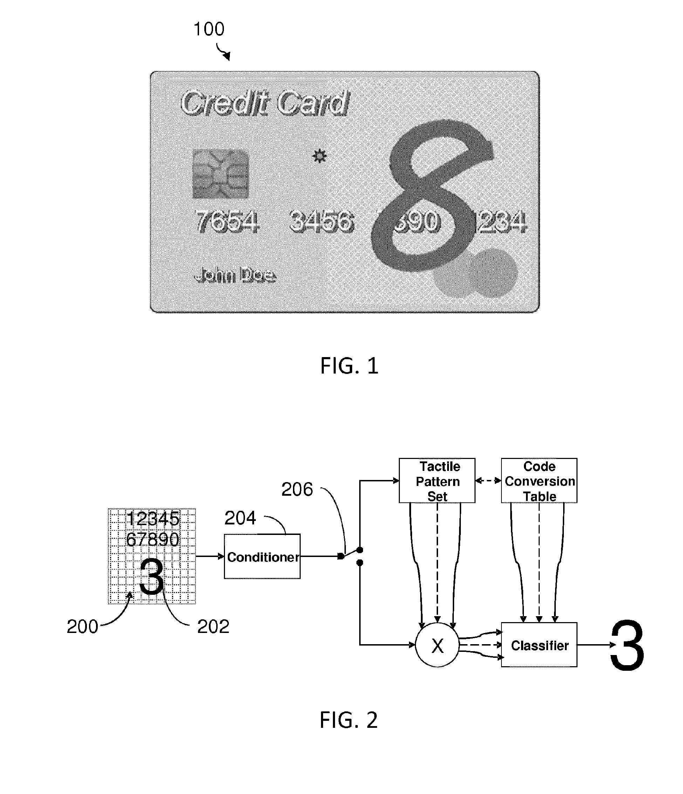

**Fig. 1** illustrates a smart card in accordance with an illustrative embodiment. The smart card 100 comprises a tactile sensing user interface which allows a user to enter a handwritten user credential for authorizing a transaction. It is known as such how to implement and configure such a tactile sensing user interface. For example, a suitable implementation has been described in the European patent application titled "Security Token and Authentication System", application number EP12155351.5, filed on 14 February 2012 by applicant NXP B.V. and published with publication number EP 2 575 084 A1 on 3 April 2013, which is incorporated herein by reference.

The smart card 100 enables, for example, a low-cost implementation of a banking card with strong multi-factor authentication. Furthermore, critical components, such as a display and mechanical buttons, may be avoided, and therefore a solid mechanical construction may be enabled that withstands strong mechanical stress. In addition, the smart card 100 may allow for battery-less operation, resulting in increased reliability, extended operational lifetime, reduced cost and less recycling problems. The user-friendly and intuitive tactile sensing user interface may enable operation by visually impaired or elderly users. The smart card 100 is compatible with existing graphical card designs. Furthermore, the tactile sensing user interface may support multilingual operation and virtual keypads for backward compatibility.

A smart card in accordance with the present disclosure may support the following transaction modes:
● ATM-based transactions in contact-bound or contactless communication mode with an authentication function executable by or through the ATM;
● ATM-based transactions in contactless communication mode with an authentication function executable by the smart card;
● POS-based transactions in contact-bound or contactless communication mode with an authentication function executable by or through the POS;
● POS-based transactions in contact-bound or contactless communication mode with an authentication function executable by the smart card;
● Online transactions (i.e. internet-enabled transactions) in contact-bound or contactless communication mode with an authentication function executable by the smart card.

In addition, as will be explained in more detail below, a smart card in accordance with the present disclosure may enable or implement complementary functions such as:
● Optical/audio user feedback to indicate detection of user input and transaction success/fail;
● Transfer of display data via NFC to an NFC-enabled mobile device;
● Transfer of display data through a modem to a mobile device;
● Transfer of display data through a contact-bound or contactless reader to a PC/laptop;
● Reference code space training that enables full multilingual support (e.g. Western, Chinese, Japanese, Thai, Korean);
● Contactless handwriting training;
● Contactless transfer of firmware and algorithm updates (classification signature updates) for field-maintenance or bank-specific authentication method updates.

Optionally, a smart card in accordance with the present disclosure may execute an on-card authentication function. In other words, the verification of the user-specific credential - implemented by comparing the machine-readable authentication code with a machine-readable reference code, for example - may be performed on the smart card instead of on an external device. Thereby, the overall security of a transaction may be increased. A financial transaction may be executed either via a web-based application, a POS-terminal or an ATM. More specifically, in order to carry out transactions a smart card of the kind set forth may interact with:
● A contactless reader device attached to or integrated into a PC or laptop;
● A contact-bound reader device attached to or integrated into a PC or laptop, provided that said reader device enables access to the tactile sensing user interface,
● A contactless reader device attached to or integrated into a POS-terminal;
● A contact-bound reader device attached to or integrated into a POS-terminal, provided that said reader device enables access to the tactile sensing user interface,
● A contactless reader device attached to or integrated into an ATM;
● A contact-bound reader device attached to or integrated into an ATM, provided that said reader device enables access to the tactile sensing user interface.

The contactless reader device may be a device that conforms to the standard ISO/IEC 14443. ISO/IEC 14443 is an international standard that defines proximity cards used for identification, and the transmission protocols for communicating with them. This standard is managed jointly by the International Organization for Standardization (ISO) and the International Electrotechnical Commission (IEC). Likewise, the contactless interface of the smart card may conform to the standard ISO/IEC 14443. Thereby, the probability that the smart card will be adopted in existing systems may be increased.

The contact-bound reader device may be a device that conforms to the standard ISO/IEC 7816. ISO/IEC 7816 is an international standard related to electronic identification cards with contacts, especially smart cards. This standard is also managed jointly by ISO and IEC. Likewise, the contact-bound interface of the smart card may conform to the standard ISO/IEC 7816. Thereby, the probability that the smart card will be adopted in existing systems may be increased.

An illustrative method of executing a transaction using a smart card in accordance with the present disclosure comprises the following steps:
● A user enters a requested user-specific credential in his handwriting through the card's tactile sensing user interface;
● The card captures the entered user-specific credential as a stream of input data and converts it into a corresponding machine-readable credential;
● The card computes a machine-readable authentication code based on the machine-readable credential and transfers said authentication code to the requesting application in encrypted format without user interaction;
● The requesting application verifies the machine-readable authentication code and returns a machine-readable success/fail-code in encrypted format;
● The requesting application returns the transaction amount, timestamp and dealer description in machine-readable and encrypted format;
● The card stores said transaction amount, timestamp and dealer description in a journal;
● The card decodes the machine-readable success/fail-code and displays it by means of a suitable indicator, for example an LED;
● An external device communicates with the card in order to display transaction-related information.

Alternatively, as mentioned above, instead of the requesting application the smart card may verify the machine-readable authentication code, in order to further increase the overall security. The user-specific credential may, for example, consist of a personal identification number (PIN) or a challenge key. If the user-specific credential is a PIN, the corresponding machine-readable authentication code may be a one-time password (OTP). It is known as such how to compute one-time passwords based on personal identification numbers. If the user-specific credential is a challenge key, the corresponding machine-readable authentication code may be a response key. It is known as such how to compute response keys based on challenge keys. Therefore, the skilled person will be able to implement and configure a computation unit in accordance with the present disclosure. Likewise, it is known as such how to implement and configure a conversion unit in accordance with the present disclosure, as will be clarified below.

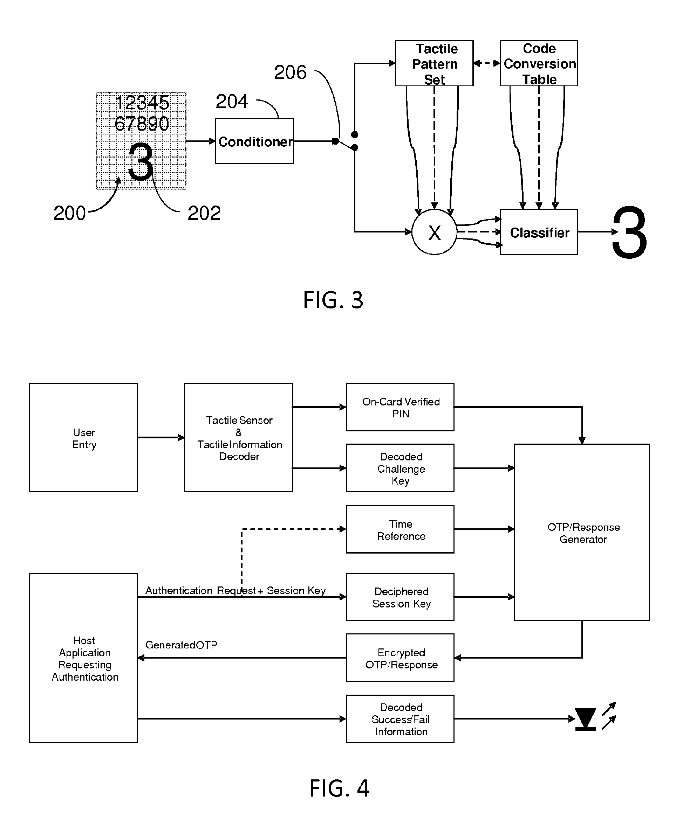

**Fig. 2** illustrates the enrolment of tactile reference patterns in a smart card. Fig. 3 illustrates the recognition of tactile reference patterns in a smart card. During authentication of a user the smart card may utilize data entry in handwritten format, for example as described in the European patent application titled "Security Token and Authentication System", application number EP12155351.5, filed on 14 February 2012 by applicant NXP B.V. and published with publication number EP 2 575 084 A1 on 3 April 2013. The decoding of handwritten user input data may be based on a tactile pattern recognition that comprises a tactile sensing user interface 200 configured to capture tactile patterns 202, a tactile pattern conditioner 204 configured to make the tactile patterns machine-readable and a mode selector 206 that switches between a reference pattern capturing or enrolment mode (as shown in Fig. 2) and a recognition mode (as shown in Fig. 3). In the reference pattern capturing or enrolment mode the smart card is effectively in a "training mode" in which it is prepared for actual use.

In said enrolment mode a collection of tactile reference patterns representing a code alphabet may be stored in machine-readable format in the smart card. An additional code conversion table may be used to increase the code entropy. In said recognition mode entered tactile patterns may be converted into machine-readable format and then correlated against characters of the trained code alphabet stored in machine-readable format in the smart card. A classifier based on a correlator may determine the code alphabet member that has been entered. Multiple character entries may form a personal identification number (PIN) code or a challenge key, for example. Thus, the tactile pattern recognition process may be implemented directly on the smart card. In this case the tactile reference patterns may be stored in the secure environment of a secure element on the smart card.

Furthermore, the resulting recognition system may represent a fully differential mode with regard to training and recognition, in the sense that it may also evaluate device-specific non-linearities during the tactile pattern capturing process. Basically, these device-specific non-linearities represent physical unclonable functions (PUFs) that may be embedded in the captured tactile reference patterns. Consequently, in the recognition mode the stream of input data may also include these device-specific non-linearities. Thus, unauthorized card reproduction may be prevented or at least strongly reduced.

**Fig. 4** illustrates authentication modes in a smart card. A smart card in accordance with the present disclosure may support at least two different authentication modes or schemes, i.e. a PIN-code authenticated OTP computation and a challenge-key triggered computation of a response key. In fact, one constituent of a transaction mode is the authentication mode or scheme used or prescribed by a transaction device.

In an OTP scheme the cardholder may enter a PIN. The PIN may be converted into machine-readable format and compared against a PIN stored on the card in the same machine-readable format. If the numbers match, the computation of an OTP may be stimulated. The OTP may be encrypted and sent to a host application for verification. Computation of the OTP may involve a session key (e.g. based on a timestamp) being provided by the host application or an internal time reference.

In a challenge/response scheme the cardholder may enter the challenge key received through a communication channel that is not necessarily the same as the channel used to communicate with the host application. The challenge key may be converted into machine-readable format and the computation of a response key may be stimulated. The response key may be encrypted and sent to a host application for verification. Computation of the response key may involve a session key (e.g. based on a timestamp) being provided by the host application.

Since the OTP or response key is encrypted, it remains unknown to unauthorized third parties who may intercept the communication from the smart card to the host application. In both modes the host application verifies the OTP or response key and returns an encrypted verification result to the smart card, where related feedback may provided to the cardholder after decryption, e.g. by an LED, a suitable audio signal or card vibration. The OTP/response-key generator (i.e. the computation unit adapted to compute the OTP/response-key) may be configured by the host application for the required mode. This enables multi-application support, in the sense that the smart card supports different authentication schemes, for example as deployed by ATMs and POS-terminals. In addition, both modes may involve an on-board time reference, which is either free-running or synchronized with an external time reference at run-time.

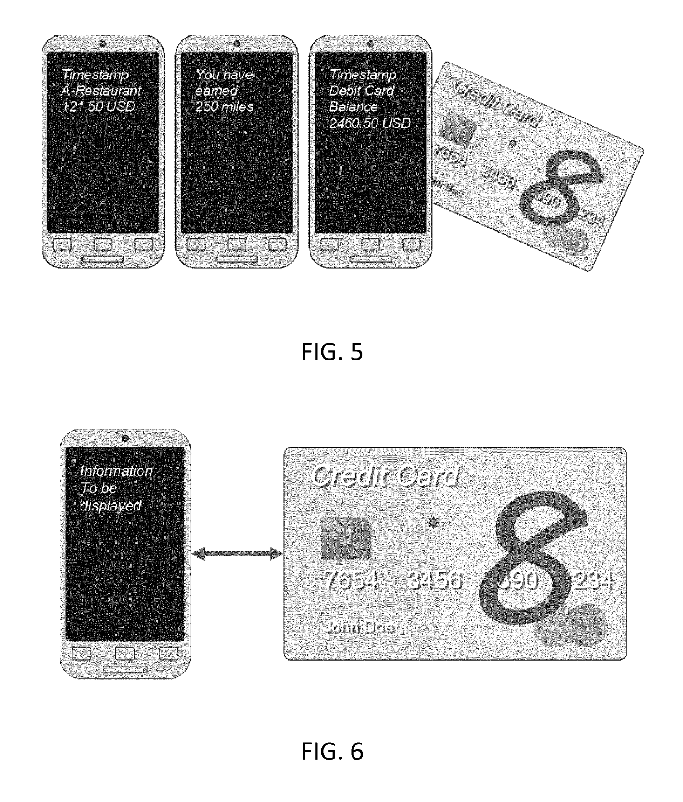

**Fig. 5** illustrates the use of an external display for displaying data to a user. As mentioned above, a smart card in accordance with the present disclosure does not need to be equipped with a display. This increases the reliability of the card and reduces its cost. Instead, other methods may be used to provide display information through different external display devices. For example, information that may be displayed through an external display may comprise restricted details of a payment transaction (brief journal), transaction-related marketing information and the balance of a debit card.

It should be noted that there may be no need to display this kind of information after every transaction. Considering human habit, users may only request feedback in terms of critical transactions. Therefore, it may be acceptable to provide the information through commonly used external display devices, such as an NFC-enabled mobile device, a mobile device connected through an audio-jack-to-7816 interface, and a PC or a laptop connected through a contact-bound or a contactless interface. It is expected that most PCs, laptops and mobile devices will be equipped with an NFC interface, an RFID interface in accordance with ISO/IEC 14443, a contact-bound interface in accordance with ISO/IEC 7816 and/or an audio interface in the future. Different options of external displays are detailed below.

**Fig. 6** illustrates the transfer of display data to a mobile phone via near field communication (NFC). In this example, an NFC-enabled mobile device may be used to read information to be displayed (i.e. display data) from a smart card of the kind set forth. In particular, the following steps may be performed: start a mobile device application; bring the smart card into proximity of the mobile device; the mobile device requests information (query); the mobile device reads information via NFC; the mobile device application displays the information; the user checks the details; the user removes the smart card; the mobile device application is terminated upon smart card removal.

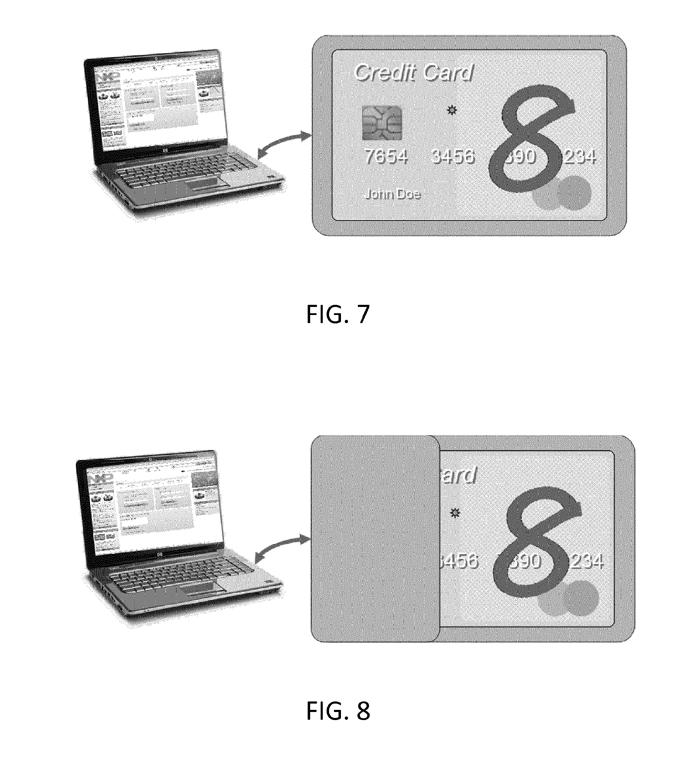

**Fig. 7** illustrates the transfer of display data to a personal computer (PC) through a contactless reader device. In this example, the contactless reader may be used to read information to be displayed from a smart card of the kind set forth. In particular, the following steps may be performed: start a PC application; bring the smart card into proximity of the reader; the PC requests information (query); the PC reads the information through the reader; the PC application displays the information; the user checks the details; the user removes the smart card; the PC application is terminated upon smart card removal.

**Fig. 8** illustrates the transfer of display data to a PC through a contact-bound reader device. In this example, the contact-bound reader may be used to read information to be displayed from a smart card of the kind set forth. In particular, the following steps may be performed: start a PC application; insert the smart card into the reader; the PC requests information (query); the PC reads the information through the reader; the PC application displays the information; the user checks the details; the user removes the smart card; the PC application is terminated upon smart card removal.

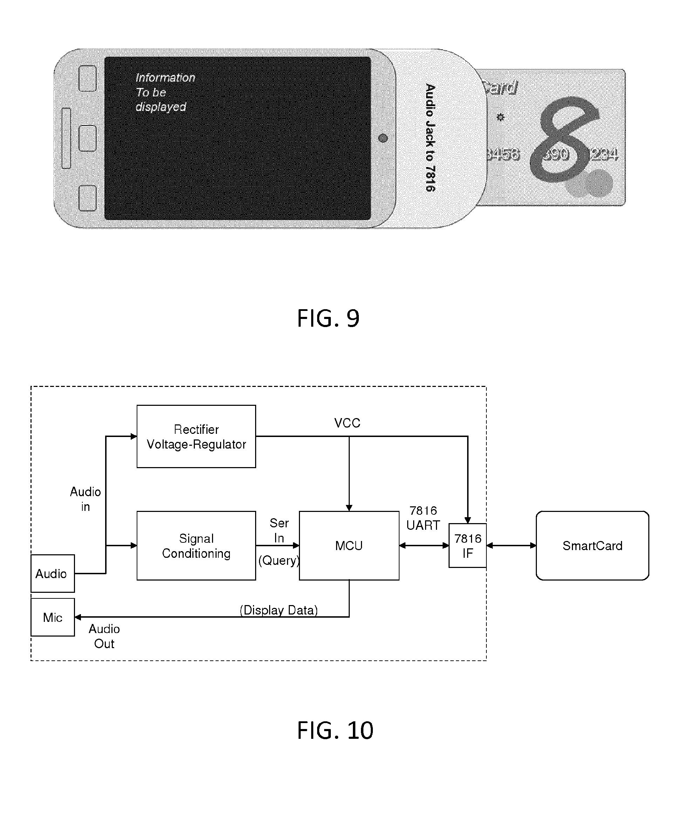

**Fig. 9** illustrates the transfer of display data to a mobile phone through a modem. In this example, the modem is a so-called audio-jack-to-ISO7816 converter. The modem may be used to read information to be displayed from a smart card of the kind set forth. In particular, the following steps may be performed: attach the audio-jack-to-7816 converter to the mobile device; start a mobile device application; insert the smart card into the audio-jack-to-7816 converter; the mobile device requests information (query); the mobile device reads the information through the audio-jack-to-7816 converter; the mobile device application displays the information; the user checks the information; the user removes the smart card; the mobile device application is terminated upon smart card removal.

**Fig. 10** illustrates a modem suitable for transferring display data to a mobile phone. In order to avoid problems with proprietary interfaces the audio-jack-to-7816 converter may be used as the least common denominator. A software application executable by the mobile device may generate a strong audio signal modulated by a decodable modulation. The strong audio signal may be rectified and regulated to provide power to the converter and also to the attached smart card. In addition, the phase-modulated, amplitude-modulated or frequency-modulated audio signal may be demodulated and the serial data (display data query) may be provided to an microcontroller unit (MCU) that converts the information into an ISO/IEC 7816-compatible APDU format (application protocol data unit format). The response from the smart card may be translated back into a serial data stream that may be converted into a decodable format and fed into the microphone input. Thus, a modem connection between the mobile device and the smart card may be established. In case the power provided by the strong audio signal is not sufficient to power the converter and the attached smart card, a primary or secondary battery may be built into the converter.

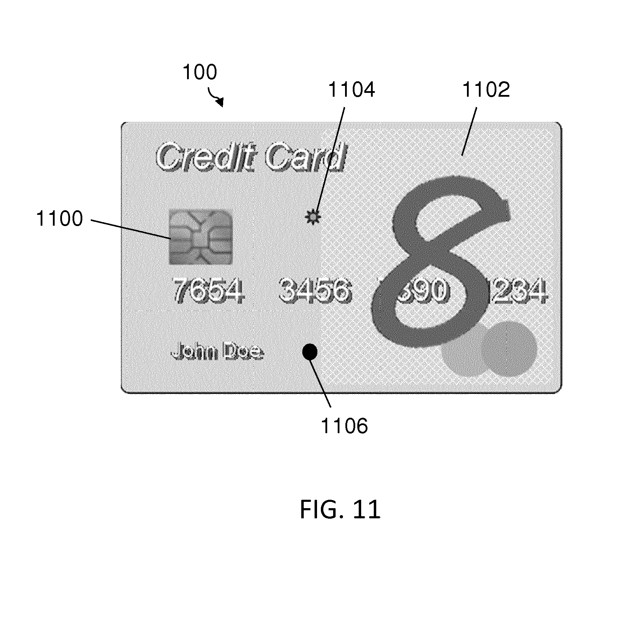

**Fig. 11** illustrates various elements of a smart card in accordance with the present disclosure. The smart card 100 comprises the following elements: a contact-bound interface 1100 for transmitting an authentication code to a first transaction device, a contactless interface (not shown) for transmitting an authentication code to a second transaction device, a tactile sensing user interface 1102 for capturing a stream of input data, an optical feedback unit 1104 and an additional feedback unit 1106, for example an audio feedback unit. Since the smart card comprises the contact-bound interface 1100, it may be used as a normal banking card if inserted into an ATM or POS-terminal. As long as banks prefer to use the keypad integrated into the ATM or POS-terminal for authentication, the user may enter a PIN directly on said keypad. In other words, in that case the tactile sensing user interface need not be used for PIN entry. However, the smart card also supports transaction modes based on entering a PIN directly on the card, for example. A bank may configure the transaction mode, in particular the authentication mode or scheme, by setting a corresponding parameter stored in the smart card, for example.

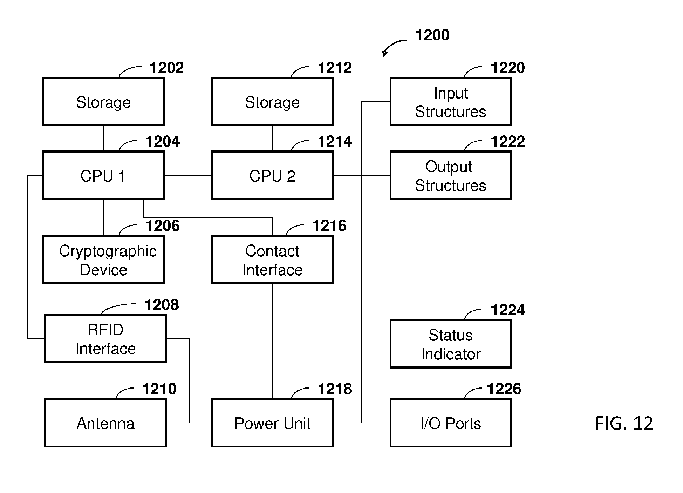

**Fig. 12** illustrates a first example of a smart card system architecture. In this example, the system 1200 comprises storage units 1202, 1212, central processing units 1204, 1214, a cryptographic device 1206, an RFID interface unit 1208, an antenna 1210, a contact-based interface 1216, a power unit 1218, input structures 1220 and output structures 1222, a status indicator 1224 and input/output ports 1226.

The system 1200 comprises a first CPU 1204 and a second CPU 1214 which may be configured by means of software for the required data processing. The power required by the smart card system may, in contactless operation, be obtained from a power unit 1218 that rectifies the antenna signal from the antenna 1210 and regulates it to the required voltage level. In contact-bound operation the supply voltage provided by the contact-bound interface 1216 may be regulated by the power unit 1218. In contactless operation the RFID interface unit 1208 may demodulate the antenna signal in order to obtain the payload information from the host system. The RFID interface unit 1208 may also modulate the payload information generated by the smart card system and may provide the modulated signal through the antenna 1210 to the host system. In contact-bound operation information exchange between an external transaction device and the first CPU 1204 may be implemented through an ISO/IEC 7816 interface represented by the contact-bound interface 1216. The second CPU 1214 may process tactile information provided by the input structures 1220, may forward information to output structures 1222 or to the status indicator 1224 for user feedback, or it may change the electrical status of general input/output (GPIOs) devices 1226. Firmware and data required to define the function of the first CPU 1204 may be stored in a storage unit 1202 attached to that CPU 1204. Likewise, firmware and data required to define the function of the second CPU 1214 may be stored in a storage unit 1212 attached to that CPU 1214.

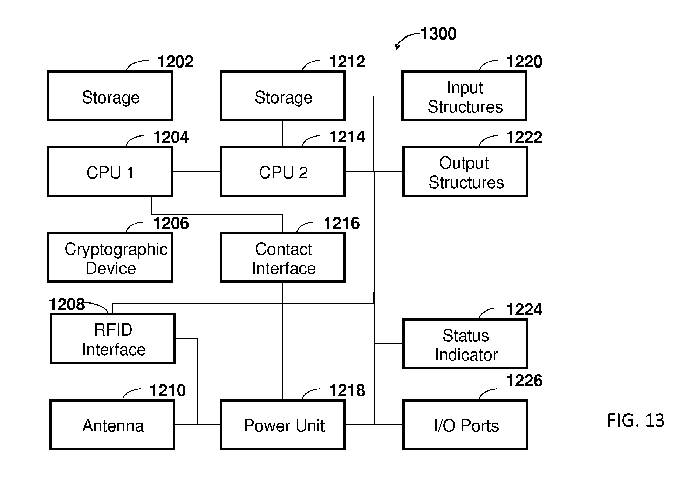

**Fig. 13** illustrates a second example of a smart card system architecture. In this system 1300, the RFID interface unit 1208 is connected to the second CPU 1214 instead of to the first CPU 1204. In this implementation the second CPU 1214 performs a part of the ISO/IEC 14443 decoding.

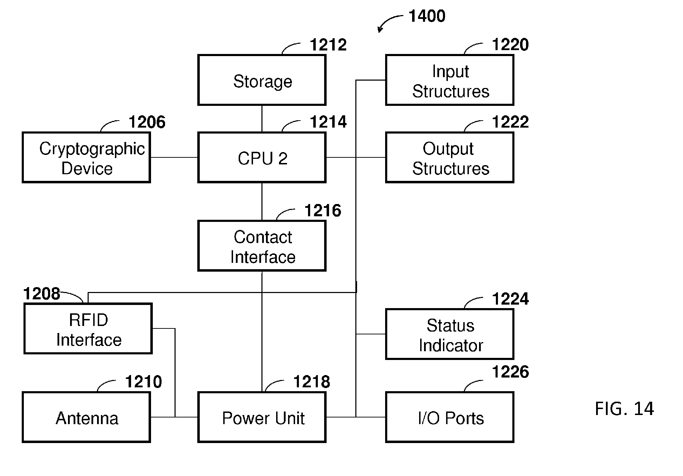

**Fig. 14** illustrates a third example of a smart card system architecture. In this system 1400, the function of the first CPU 1204 is taken over by the second CPU 1214 and the RFID interface unit 1208 is connected to the second CPU 1214 in accordance therewith. In this implementation the second CPU 1214 may perform a part of the ISO/IEC 14443 decoding.

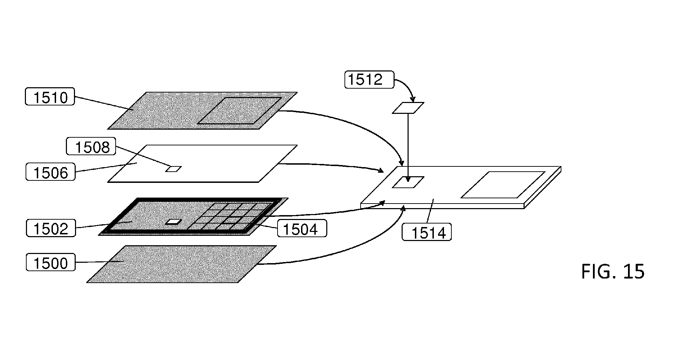

**Fig. 15** illustrates how a smart card is fabricated from several components. In particular, a smart card of the kind set forth may be composed of bottom foil 1500, a system inlay 1502, a tactile interface 1504, a compensation layer 1506 having a cut-out 1508, top foil 1510, and a contact interface module 1512. The assembled smart card 1514 is shown on the right-hand side of Fig. 15.

In order to minimize costs, the smart card system may be assembled on a single substrate or system inlay 1502 which is made from the same material as the embedding card. After lamination it may form together with the other card layers a solid block of material. Chip components may be assembled using direct chip attach, thus avoiding costly chip packages. Passive components may either be soldered by low-temperature solder or may be glued using ICP silicon paste. A compensation layer 1506 with a cut-out 1508 at chip and component positions may be put on top of the substrate 1502. A top layer 1510 and a bottom layer 1500 may complete the card construction. The card layers may either be directly laminated or thin glue layers may be used to link the various card layers.

In case of lamination without glue layers the substrate material may be identical to the embedding material except the softening temperature, which may have a higher softening temperature than that of the embedding material. As a consequence, the PCB structures on the substrate may be maintained during lamination. Polyurethane foil (TPU) may be used as glue layer. After card lamination an opening may be milled into the card's surface that may reach down to the substrate's connection layer. A contact module may be assembled into the milled cut-out either by ACA glue, ACF, NCA glue, NCF, by soldering or other means with the objective to fix the contact module. The contact module may be configured to provide contact between the contact modules surface and the smart card substrate in order to connect the contact interface to the related smart card components.

Finally, it is noted that the drawings are schematic. In different drawings, similar or identical elements are provided with the same reference signs. Furthermore, it is noted that in an effort to provide a concise description of the exemplary embodiments, implementation details which fall into the customary practice of the skilled person may not have been described. It should be appreciated that in the development of any such implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill.

The above-mentioned embodiments are merely illustrative, and the skilled person will be able to design many alternative embodiments without departing from the scope of the appended claims. In the claims, any reference sign placed between parentheses shall not be construed as limiting the claim. The word "comprise(s)" or "comprising" does not exclude the presence of elements or steps other than those listed in a claim. The word "a" or "an" preceding an element does not exclude the presence of a plurality of such elements. The features in a claim may be implemented by means of hardware comprising several distinct elements and/or by means of a suitably programmed processor. In a device claim enumerating several means, several of these means may be embodied by one and the same item of hardware. The mere fact that certain measures are recited in mutually different dependent claims does not indicate that a combination of these measures cannot be used to advantage.

### LIST OF REFERENCE NUMBERS

- 100: smart card
- 200: tactile sensing user interface
- 202: tactile patterns
- 204: tactile pattern conditioner
- 206: mode selector
- 1100: contact-bound interface
- 1102: tactile sensing user interface
- 1104: optical feedback unit
- 1106: additional feedback unit
- 1200: smart card architecture
- 1202: storage unit
- 1204: central processing unit
- 1206: cryptographic device
- 1208: contactless interface
- 1210: antenna
- 1212: storage unit
- 1214: central processing unit
- 1216: contact-bound interface
- 1218: power unit
- 1220: input structures
- 1222: output structures
- 1224: status indicator
- 1226: input/output ports
- 1300: smart card architecture
- 1400: smart card architecture
- 1500: bottom foil
- 1502: system inlay
- 1504: tactile sensing user interface
- 1506: compensation layer
- 1508: cut-out
- 1510: top foil
- 1512: contact-bound interface module
- 1514: assembled smart card

## Claims

1. A security token, in particular a smart card, being adapted to support multi-factor user authentication, said security token comprising:
a tactile sensing user interface being adapted to capture a stream of input data corresponding to a sequence of positions of a finger engaging with said tactile sensing user interface and representing a user-specific credential for authorizing a transaction;
a conversion unit being adapted to convert said stream of input data into a machine-readable credential;
a computation unit being adapted to compute a machine-readable authentication code based on the machine-readable credential;
a contact-bound interface being adapted to transmit said machine-readable authentication code to a first transaction device;
a contactless interface being adapted to transmit said machine-readable authentication code to a second transaction device.

2. A security token as claimed in claim 1, further comprising a comparison unit being adapted to compare the machine-readable authentication code with a machine-readable reference code stored in the security token and to generate a corresponding authentication result, and wherein the contact-bound interface and the contactless interface are further adapted to transmit said authentication result to the first transaction device and the second transaction device, respectively.

3. A security token as claimed in claim 1 or 2, wherein the user-specific credential is a personal identification number or a challenge key.

4. A security token as claimed in any preceding claim, wherein the contact-bound interface conforms to the standard ISO/IEC 7816.

5. A security token as claimed in any preceding claim, wherein the contactless interface conforms to the standard ISO/IEC 14443.

6. A security token as claimed in any preceding claim, wherein the computation unit is configurable by a host application which is external to the security token.

7. A security token as claimed in any preceding claim, wherein the stream of input data includes device-specific non-linearities.

8. A security token as claimed in any preceding claim, further comprising an optical feedback unit.

9. A security token as claimed in any preceding claim, further comprising an audio feedback unit.

10. A security token as claimed in any preceding claim, further being adapted to transfer display data to an external display device via near field communication.

11. A security token as claimed in any preceding claim, further being adapted to transfer display data to an external display device through a contactless reader device.

12. A security token as claimed in any preceding claim, further being adapted to transfer display data to an external display device through a contact-bound reader device.

13. A security token as claimed in any preceding claim, further being adapted to transfer display data to an external display device through a modem.

14. A transaction authorization system comprising a security token as claimed in any preceding claim and a transaction device.

15. A transaction authorization system as claimed in claim 14, wherein the transaction device is one of a personal computer, a POS-terminal and an ATM.

## Amended claims

### Amended claims in accordance with Rule 137(2) EPC.

1. A security token, in particular a smart card, being adapted to support multi-factor user authentication, said security token comprising:
a tactile sensing user interface being adapted to capture a stream of input data corresponding to a sequence of positions of a finger engaging with said tactile sensing user interface and representing a user-specific credential for authorizing a transaction;
a conversion unit being adapted to convert said stream of input data into a machine-readable credential;
a computation unit being adapted to compute a machine-readable authentication code based on the machine-readable credential;
a contactless interface being adapted to transmit said machine-readable authentication code to a second transaction device,
**characterized in that** the security token further comprises a contact-bound interface being adapted to transmit said machine-readable authentication code to a first transaction device;
and **in that** the security token is adapted to transfer display data to an external display device via or through at least one of: via near field communication, through a contactless reader device, through a contact-bound reader device, through a modem.

2. A security token as claimed in claim 1, further comprising a comparison unit being adapted to compare the machine-readable authentication code with a machine-readable reference code stored in the security token and to generate a corresponding authentication result, and wherein the contact-bound interface and the contactless interface are further adapted to transmit said authentication result to the first transaction device and the second transaction device, respectively.

3. A security token as claimed in claim 1 or 2, wherein the user-specific credential is a personal identification number or a challenge key.

4. A security token as claimed in any preceding claim, wherein the contact-bound interface conforms to the standard ISO/IEC 7816.

5. A security token as claimed in any preceding claim, wherein the contactless interface conforms to the standard ISO/IEC 14443.

6. A security token as claimed in any preceding claim, wherein the computation unit is configurable by a host application which is external to the security token.

7. A security token as claimed in any preceding claim, wherein the stream of input data includes device-specific non-linearities.

8. A security token as claimed in any preceding claim, further comprising an optical feedback unit.

9. A security token as claimed in any preceding claim, further comprising an audio feedback unit.

10. A transaction authorization system comprising a security token as claimed in any preceding claim and a transaction device.

11. A transaction authorization system as claimed in claim 10, wherein the transaction device is one of a personal computer, a POS-terminal and an ATM.
